Europäisches Patentamt

European Patent Office

Office européen des brevets

(19)

(11) Publication number: **0 343 483**
**A2**

## (12) EUROPEAN PATENT APPLICATION

(21) Application number: **89108734.8**

(22) Date of filing: **16.05.89**

(51) Int. Cl.⁴: **C08K 3/04 , C08L 71/00 , F16C 33/20**

(30) Priority: **26.05.88 GB 8812511**
**05.07.88 GB 8815989**

(43) Date of publication of application:
**29.11.89 Bulletin 89/48**

(84) Designated Contracting States:
**AT DE FR**

(71) Applicant: **T&N TECHNOLOGY LIMITED**
**Cawston House Cawston**
**Rugby Warwickshire, CV22 7SB(GB)**

(72) Inventor: **Davies, Glyndwr John**
**2 Cox Crescent**
**Dunchurch Rugby Warwickshire(GB)**

(74) Representative: **Hadfield, Robert Franklin et al**
**Bowdon House PO Box 20 Ashburton Road**
**West Trafford Park**
**Manchester M17 1RA(GB)**

(54) **Self-lubricating materials.**

(57) Self-lubricating materials are described comprising a plastics material matrix and having lubricant containing exfoliated graphite therein. Exfoliated graphite has a high affinity for greases and oils and allows the processing of the plastics material without significant plasticisation and weakening of the matrix material.

EP 0 343 483 A2

## Self-Lubricating Materials

The present invention relates to bearing materials and particularly to materials known as dry or self-lubricating bearing materials. It should be noted, however, that the materials of the present invention are not limited to bearing applications in the conventional sense.

Bearing materials having a plastics material matrix and containing graphite are well known. The graphite acts as a self-lubricating medium in the event, for example, that an external lubricant supply ceases.

It is desirable for a dry bearing material to contain a supply of lubricant. However, attempts in the past to incorporate oil or grease into a plastics material matrix have resulted in the matrix strength being seriously impaired. The processing temperature of most polymers also results in virtually all of the available lubricant being lost during processing.

GB Patent No. 2128629 describes exfoliated gaphite and its ability to absorb many times its own weight of oil or grease.

It has now been found that lubricant containing exfoliated graphite may be incorporated into a plastics material matrix without a further significant reduction in strength over that caused by ordinary graphite. This is because the high interaction of the oil and exfoliated graphite prevents the escape of oil into the polymer matrix which would cause plasticisation and weakening of the matrix. The oil is retained within the graphite even under extreme processing conditions.

According to the present invention a self-lubricating material comprises a plastics material matrix having therein lubricant containing exfoliated graphite.

The content of dry graphite (ie as distinct from the weight of lubricant filled graphite) within the matrix may lie in the range from 3 wt% to 60 wt %. A preferred graphite range may comprise 5 wt% to 30 wt% and an even more preferred range from 5 wt% to 15 wt%.

The graphite may itself contain from 0.25 to 10 times its own weight of lubricant. A more preferred range may comprise 0.5 to twice its own weight.

The lubricant in the graphite may be any known lubricant which is compatible with the graphite and amenable to the processing conditions of the plastics material matrix.

The plastics material matrix may comprise any known polymer and be compatible with the lubricant employed. Examples of such suitable matrix materials include:-polyphenylene sulphide and other poly arylene sulphides; polyether ether ketone; poly ether ketone; poly phenylene ethers and other poly arylethers; poly aryl ketones, poly sulphones;

polyoxybenzoyl polyesters; perfluoro alkoxy polymers; fluoro ethylene propylene ether polymers; fluorinated ethylene propylene polymer; polyvinylidene di fluoride; poly tetra fluoro ethylene; aromatic polyesters, (polyarylates); aromatic polamides; poly ether imide; poly amide imide; poly imide sulphone; poly imides; self reinforcing (liquid crystal) polymers; conducting polymers such as polypyrroles and polyacetylenes; silicone resins; thermosetting resins (such as phenolic; PTF-phenoltoluene formaldehyde; cresylic; furane; epoxide resins); ethylene tetrafluoro ethylene; polychlorotetra- fluoro ethylene; polyesters (such as PET- polyethylenetetraphthalate and polybutylene phthalate); polyamides (such as Nylon 6 and Nylon 66); acetal homopolymer and acetal copolymer; high molecular weight polyethylene.

A preferred plastics matrix material may be a poly cyano aryl ether. An example of this material is known as poly ether nitrile and sold as ID300 (trade name) by Idemitsu Kosan Company Limited of Japan and is described in European patent application No. 0243000.

Compositions may be formulated for processing by methods including injection moulding, extrusion, compression moulding, casting etc.

The material may be used for any desired applications such as bearing bushes, slide plates, pump vanes etc.

Materials made incorporating lubricant containing exfoliated graphite have shown unusually high dry wear resistance and low coefficients of friction, whilst retaining good mechanical strength properties.

In order that the present invention may be more fully understood examples will now be described by way of illustration only.

Example 1

3 Kg of Foliac X6236 (trade name) natural flake graphite was stirred at room temperature in a mixture of concentrated nitric and sulphuric acids in the proportions by weight of 75% $H_2SO_4$ + 15% $HNO_3$ + 10% $H_2O$. After 2 hours the mixture was diluted with water and washed free of acid with a continuous stream of room temperature water. The graphite was dried at 80°C for three hours and then flame exfoliated at about 1000°C giving a product of density 0.5 g/cc.

1 Kg of this material was mixed with 2 Kg of Dow Corning 200 (Trade Mark) silicone fluid 30,000 c/s using a heated tumble mixer at about 50°C for 10 min.

The oil filled graphite was then compounded into Vectra (Trade Mark) liquid crystal polyester using a twin screw compounding machine at a level of 30% filler 70% resin by weight. The pellets produced were moulded into bearing components on an injection moulding machine. Testing of these components showed unusually good dry wear resistance and low friction with unusually high mechanical strength properties.

Example 2

A wear-resisting composition was formulated for use in the injection moulding of vanes for use in rotary compressors and vacuum pumps in applications where the vanes run without external lubrication in the vane pump cavity.

3Kg of exfoliated graphite, made as described in Example 1 was heated and stirred with one litre of Hitec 168 (Trade Mark) polyalphaolefin oil. This was compounded together with 1Kg of Fluon G163 (Trade Mark) ptfe into linear high molecular weight polyphenylene sulphide resin grade Ryton GR06 (Trade Mark) at 300-320° C on a twin screw compounding machine and pelletized.

Granules of the composition were injection moulded into rectangular vanes and after final machining to size were tested in a vane pump. Performance was superior to the conventional carbon blades.

Example 3

1 Kg of exfoliated graphite was made as described in Example 1, and tumbled for 30 minutes at room temperature with 1.5 kg of Mobil-1 (Trade Mark) synthetic lubricating oil. This material was then mixed with caprolactam in the proportions 25 wt% filler to 75 wt% of caprolactam in a bush mould. Acid catalysed polymerisation of the caprolactam to Nylon 6 produced a product of composition 15% oil 10% graphite 75% Nylon 6 with all of the oil contained within the graphite phase which itself was homogeneously dispersed throughout the cast bush component.

Mechanical testing of the cast bush gave strength values far in excess of those obtained on conventional oil filled nylon compositions. Friction and wear values were also superior to conventional material because of the higher final oil content.

Claims

1. A self-lubricating material comprising a plastics material matrix characterised by having therein lubricant containing exfoliated graphite.

2. A self-lubricating material according to Claim 1 characterised in that the dry graphite content lies in the range from 3 to 60 wt%.

3. A self-lubricating material according to either Claim 1 or Claim 2 characterised in that the graphite contains from 0.25 to 10 times its own weight of lubricant.

4. A self-lubricating material according to any one preceding claim characterised in that the plastics material matrix is selected from the group comprising: polyphenylene sulphide and other poly arylene sulphides; polyether ether ketone; poly ether ketone; poly phenylene ethers and other poly arylethers; poly aryl ketones, poly sulphones; polyoxybenzoyl polyesters; perfluoro alkoxy polymers; fluoro ethylene propylene ether polymers; fluorinated ethylene propylene polymer; polyvinylidene di fluoride; poly tetra fluoro ethylene; aromatic polyesters, (polyarylates); aromatic polamides; poly ether imide; poly amide imide; poly imide sulphone; poly imides; self reinforcing (liquid crystal) polymers; conducting polymers such as polypyrroles and polyacetylenes; silicone resins; thermosetting resins (such as phenolic; phenoltoluene formaldehyde; cresylic; furane; epoxide resins); ethylene tetrafluoro ·ethylene; polychlorotetrafluoro ethylene; polyesters (such as polyethylenetetraphthalate and polybutylene phthalate); polyamides (such as Nylon 6 and Nylon 66); acetal homopolymer and acetal co-polymer; high molecular weight polyethylene.

5. A self-lubricating material according to any one of preceding claims 1 to 3 characterised in that the plastics material matrix comprises poly cyano aryl ether.